## Europäisches Patentamt

## European Patent Office

## Office européen des brevets

(19)

(11) Publication number: **0 205 443 B1**

## EUROPEAN PATENT SPECIFICATION

(12)

(45) Date of publication of patent specification: **15.04.92**

(51) Int. Cl.⁵: **C01B 33/12**, C01G 25/00, C01G 25/02

(21) Application number: **85901299.9**

(22) Date of filing: **07.03.85**

(86) International application number:
**PCT/AU85/00040**

(87) International publication number:
**WO 85/04158 (26.09.85 85/21)**

(54) **TREATMENT OF ZIRCON.**

(30) Priority: **21.03.84 US 594890**
**11.07.84 US 629873**

(43) Date of publication of application:
**30.12.86 Bulletin 86/52**

(45) Publication of the grant of the patent:
**15.04.92 Bulletin 92/16**

(84) Designated Contracting States:
**AT BE CH DE FR GB LI LU NL SE**

(56) References cited:
**GB-A- 818 690**
**US-A- 3 749 763**
**US-A- 3 811 907**
**US-A- 4 217 479**
**US-A- 4 220 843**

**No relevant documents have been disclosed.**

**Journal of Material Science 16 (1981) Letters page 1732-35**

(73) Proprietor: **ICI AUSTRALIA LIMITED**
**1 Nicholson Street**
**Melbourne, VIC 3001(AU)**

(72) Inventor: **COLDREY, Peter, Wallace**
**38 Tuxen Street**
**North Balwyn, VIC 3104(AU)**
Inventor: **NGUYEN, Hung, Van**
**160 Finch Street**
**Glen Iris, VIC 3146(AU)**
Inventor: **REICHERT, Bernhard, Ernst**
**16 Muir Street**
**Mount Waverley, VIC 3149(AU)**
Inventor: **PARRIS, David**
**12 Almer Avenue**
**Nunawading, VIC 3131(AU)**

(74) Representative: **Arthur, Bryan Edward et al**
**Withers & Rogers 4 Dyer's Buildings Holborn**
**London EC1N 2JT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a process for the preparation of zirconia from zirconium silicate minerals and more particularly to a high temperature process for the preparation of zirconia from zircon.

A common source of commercial zirconium products, including zirconia, is the naturally occurring mineral zircon. A number of processes for breaking down the zircon to give zirconium dioxide (zirconia) have been commercialized. For example zircon has been dissociated into zirconia and silica by passing the zircon through a plasma furnace. The temperature of commercial plasma furnaces is up to 10,000ºC. It has been possible to dissociate the zircon at least partially into a zirconia rich phase and a silica rich phase, however not without substantial melting of the zirconia. As the zircon is heated above the melting point of zirconia the resultant product comprises dendrites of zirconia crystallites in a matrix of silica. (Charles; Mining and Metall. Trans. 79C 54 - 59 (1970).)

U.S. Patent 3811907 and U.S. Patent 3749763 describe a particular method of using a plasma furnace which results in the formation of dendritic zirconia crystallites set in a matrix of pure silica. The physical form of the zirconia dendrites is said to be in the form of minute crystallites less than 0.2 microns.

There is no way in which the temperatures of the reactors in a plasma process can be strictly controlled to a desired temperature range. However we have now found that substantial benefits can be achieved if the zircon is heated to a narrow temperature range below the melting point of the zirconia rich phase. This can not be achieved in currently available commercial plasma furnaces. Hitherto it has been believed that zircon must be heated to a temperature above the melting point of the zirconia rich phase for substantial dissociation of the zircon to occur at a reasonable rate.

For example, US Patent 3,749,763 discloses a plasma reactor having a zone of intense heat at about 20,000ºF (11,093ºC) (co. 4, lines 49-55). In contrast, in the present invention the particles are only heated to approximately 2100º-2400ºC. By carefully controlling the temperature and not permitting the particles to exceed the melting point of zircon, significant advantages are achieved, as noted above.

The zirconia from our process is produced as compact clusters of crystallites unlike the spherulites of elongated dendrites obtained when the zircon is heated in a plasma arc above the melting point of the zirconia.

The improved physical form of our product produced by controlled heating leads to process economies.

Thus we have found that using product of the process of our invention it is easier to leach out the zirconia from the silica rich matrix of our invention using an acid leach than the product produced from a commercial plasma arc process. We believe that this easy acid leach property is caused by the physical form of the zirconia particles and the nature of the silica rich matrix found in our invention. A further benefit of our process is that the percentage dissociation of zircon is extremely high.

Accordingly we provide a process for treatment of zircon which comprises passing zircon particles of average dimensions less than 1000 microns and above 50 microns preferably between 70 and 350 microns through a reactor in which the particles are heated up to a temperature above the melting point of silica but below the melting point of zirconia and wherein the particles pass through the reactor as discrete particles and wherein the residence time in the reactor is less than 10 sec.

Zircon is obtainable commercially in graded size ranges. We have found that the very fine grade of zircon (zircon flour) of average size range 20 microns or below do not give as high a degree of dissociation as coarser grades of zirconia. This is completely unexpected. In our process we prefer that the zircon feed stock has an average size in the range from 100 to 250 microns. Commercial grades of zircon normally have a particle size range of at least 80% within plus or minus 25 microns about the average. Zircon sand above 250 microns average size is not as far as we are aware commercially available. We have found that the nature of the zircon is not critical however if it is subsequently desired to purify the zirconia then the nature of the impurities in the zircon may be important.

The nature of the reactor is not critical as long as particle fluidisation and temperature control can be achieved.

For example tube reactors may be used in which the feed material is heated by a suitable energy source and the feed material is fed say by gravity down the middle of the tube and out of contact of the walls of the tube and the energy sources. The source of heat energy may be either external to the tube or may be situated inside the tube reactor. Preferably the source of heat energy provides high intensity radiant energy.

We have found that a tube reactor particularly suitable for our process is a high temperature fluid-wall reactor.

High temperature fluid-wall reactors suitable for use in the process of the present invention include reactors of the type described in Australian Patent Nos. 513,116 and 497,207 the specifications of which are

EP 0 205 443 B1

herein incorporated by reference. Such reactors in general comprise a reaction zone defined by an annular envelope of substantially radiation transparent inert fluid within a radiation reflecting refactory shell. Material in the reaction zone being heated to the required temperature by the incidence of high intensity radiant energy.

The fluid-wall reactor may comprise a reaction chamber defined by a reactor tube made of an essentially radiation transparent or blackbody porous material which is located within a shell of radiation reflecting refractory material and a radiant energy source which can direct radiant energy into the reaction chamber. In the operation of such a fluid-wall reactor substantially radiation transparent inert fluid is introduced into the reaction chamber under pressure through the porous reactor tube wall to form an annular envelope which protectively blankets the reactor tube wall and defines the reaction zone. One or more reactants are introduced into the reaction chamber in such a way that they are directed down the centre of the reactor tube, the annular envelope of inert fluid confining the reactants essentially in the centre of and out of contact with the reactor tube. High intensity radiant energy is directed into the reaction chamber, sufficient radiant energy being supplied to raise the temperature of the reactants in the reaction zone to the desired level.

The residence time in the reactor is not narrowly critical to the degree of dissociation of zircon to zirconia however we have found that the rate of dissolution of the resultant zirconia in acid is reduced somewhat with increase of residence time. In a fluid-wall reactor of commercial size depending upon design residence times from about 0.5 to 10 seconds are possible. We prefer that the residence time should be towards the lower end of the range say 0.5 - 5 seconds most preferably 0.5 to 2.5 seconds. By residence time we mean the average residence time of the particles calculated from flow rates and conditions in the reactor. It is not practicable to measure the exact residence time of any particular particles in the reactor.

Preferably the temperature is controlled between 2000 and 2400 most preferably between 2200 and 2300°C. Below 2100°C the rate of dissociation is too slow for complete dissociation to occur unless the residence time is increased to an impractical level. Above about 2350°C some spherulites of elongated dendrites are formed presumably from partial melting of the zirconia rich phase.

Zircon does not absorb radiant heat very efficiently and hence preferably a radiation absorbant such as carbon black is mixed with the zircon particles prior to reaction so that the zircon particles achieve the desired temperature.

The rate of feed of zircon through the reactor and the proportion of carbon black or other radiation absorber mixed with the feedstock are not narrowly critical. The feed rate should not be so large that the reactor is choked or that particles do not receive the necessary radiant energy to heat up. We have found that in a 15cm diameter reactor of the fluid wall radiation type that a feed rate as high as 1 to 2 kg per minute is satisfactory. These feed rates could be increased by increase in the radiant energy generated in the reactor. We have found in a 30cm diameter reactor that a feed rate in the range 2 to 6 kg per minute is satisfactory.

The amount of radiation absorber added should be sufficient to absorb sufficient energy to heat the zircon. For example in our preferred temperature ranges we have found that w/w percentages of carbon in the range 0.1 - 5% are satisfactory preferably 0.2 - 1%. Higher amounts of carbon may be added but without much additional benefit. If a smaller proportion of carbon is added the particles may fail to heat up to the nominal temperature of the furnace. The addition of carbon is not essential. At temperatures above about 2400°C the absence of carbon has little affect. At furnace temperatures of about 2200°C the particles appear to heat up to about 200 - 300° lower than the furnace temperature. From furnace temperature of 2200 to 2400 the effect of carbon is believed to decrease steadily.

Unused carbon may be removed from the product by adding a small proportion of oxygen containing gas to the exit stream from the reactor. The addition of oxygen to the exit stream has no deleterious effect on the properties of dissociated zircon.

We also provide dissociated zircon particles comprising compact clusters of crystallites of zirconia set in a matrix of a glass comprising a major proportion of silica wherein the dissociated zircon particles are in the size range of from 62 to 1240 microns preferably from 85 - 475 microns most preferably 124 - 310 microns and when at least 90% of the compact clusters of zirconia are below 0.5 microns preferably below 0.2 microns in maximum dimension.

There is a volume charge in changing from zircon to dissociated zircon and this leads to an increase in the diameter of the dissociated zircon compared to the zircon feed.

By 'compact' clusters we mean clusters which when the dissociated zircon particles are cross-sectioned and examined at x 3,000 magnification show zirconia in the form of discrete masses the majority of which are approximately circular. By contrast the plasma arc product under this magnification shows extended dendritic zirconia crystallite clusters.

3

It is difficult to analyse the composition of the glassy matrix in the product of our invention but from consideration of the difference between total zirconia present in the product and crystalline zirconia as measured by XRD we calculate that the glassy matrix of the product of our invention may contain from about 5% to about 20% amorphous zirconia. By amorphous we mean unable to be detected by us using conventional XRD techniques.

We have also found that it is surprisingly easy to leach the zirconia from the dissociated zircon leaving porous silica particles.

We also provide porous silica particles comprising more than 90% silica made by leaching the dissociated zirconia particles of our invention to remove a major proportion of the zirconia.

The pore size of the porous silica particles as measured by mercury intrusion porosimetry has been found to be substantially in the region of .01 to 0.1 microns. This measurement implies that the average zirconia crystallite size in the dissociated zircon product of our invention is less than 0.1 microns.

The nature of the reagent used for leaching is not narrowly critical except that it should dissolve zirconia substantially without attrition of the silica matrix.

A suitable reagent is for example concentrated sulphuric acid.

Surprisingly the dissociated zircon of our invention is leached by concentrated sulphuric acid more completely and more quickly than the dissociated zircon produced in a plasma arc reactor. We have also found that the ease of acid leaching decreases to some extent with residence time in the reactor.

The invention is now illustrated by, but in no way limited to, the following Examples.

Examples 1 to 4

All experiments were carried out in a fluid-wall reactor having a 15cm diameter porous carbon reactor tube. The blanket gas (nitrogen) used to form the fluid-wall and cool the reactor tube was introduced at a flow rate of 29 scfm. The reaction chamber was swept with a sweep gas (nitrogen) at a flow rate of 6 scfm. The finely divided solid feed was introduced into the reaction chamber at a feed rate of 454 g/min aided by a flow of nitrogen gas at a flow rate of 5 scfm.

The reaction product collected comprised a high bulk density material and a fluffy low bulk density material which was made up mainly of amorphous silica. Details of the reaction conditions and the results of qualitative analysis of the high bulk density product material are detailed in Table 1 below.

The finely divided solid feed consisted of zircon (98% weight) and carbon powder (2.0% per weight). The carbon powder was Elftex 8 and was pre-blended with the zircon.

The residence time was estimated by assuming complete entrainment of the particles in the gas stream. The gas flow rate and conditions were taken as the arithmetic means of rates and conditions at the reactor inlet and outlets.

The analysis of the product was made by chemical methods.

4

TABLE 1

| Maximum diameter of particles (Microns) | Temperature (°C) | Residence time (Seconds) | % low bulk density material of total feed | % of high bulk density material of total feed | Analysis of high bulk density material | | |
|---|---|---|---|---|---|---|---|
| | | | | | %ZrO₂ | %Zircon | %silica |
| 50 | 2300 | 2.4 | 22 | 78 | 85 | 0 | 12 |
| 50 | 2150 | 1.2 | 8 | 92 | 65 | 1 | 31 |
| 100 | 2300 | 0.9 | 2 | 98 | 65 | 2 | 29 |
| 50 | 1600 | 1.2 | 0 | 100 | 0 | 100 | 0* |

* Not of our invention

Example 5

A further eleven runs were carried out as described in Examples 1 to 4.
The grades of zircon feed stock used were:-Consolidated Rutile Premium 1 zircon average particle size 105 microns and RZ mines Premium B zircon flour average particle size 20 microns.

5

The throughput was either .5 kg/min or 1.5 kg/min and for some runs oxygen was injected into the tail gas to burn off excess carbon.

The degree of dissociation was measured by X-ray diffraction (XRD).

A sample of dissociated zirconia from a commercial plasma process was analysed by XRD and was found to contain 2.1% zircon.

TABLE 2

| RUN NO. | THROUGHPUT (Kilo/min) | RESIDENCE TIME (Secs) | AVERAGE PARTICLE SIZE | TEMP °C | AIR INJECTION TO TAILGAS | % ZIRCON * |
|---|---|---|---|---|---|---|
| 1 | 0.5 | 0.9 | 105 | 2300 | Yes | 0.3 |
| 2 | 1.5 | 0.9 | 105 | 2300 | No | 0.2 |
| 3 | 1.5 | 0.9 | 105 | 2300 | No | 0.4 |
| 4 | 0.5 | 0.9 | 105 | 2150 | yes | 0.5 |
| 5 | 0.5 | 0.9 | 105 | 2150 | Yes | 0.1 |
| 6 | 1.5 | 1.2 | 30 | 2300 | Yes | 6.7 |
| 7 | 1.5 | 1.2 | 30 | 2300 | Yes | 11.5 |
| 8 | 0.5 | 1.2 | 30 | 2300 | No | 12.1 |
| 9 | 0.5 | 1.2 | 30 | 2150 | No | 8.3 |
| 10 | 0.5 | 1.2 | 30 | 2150 | No | 8.3 |
| 11 | 1.5 | 1.2 | 30 | 2150 | Yes | 4.3 |

* measured by X-ray diffraction

6

Example 6 Acid Leach

Samples of dissociated zircon prepared in Example 5 were leached with concentrated sulphuric acid heated under reflux under standardised conditions. The speed of leach was measured by the rate of production of water.

The results are shown in Table 3.

| Sample | Example 5 Run No. | % Zirconia Extracted | Speed of Leach |
|---|---|---|---|
| | 1 | 88.7 | Fast |
| | 5 | 89.5 | Fast |
| | 6 | 86.5 | Fast |
| Control* | | 76.1 | Medium |

\* Dissociated zircon from a commercial plasma arc

Example 7 Caustic leach

Ground samples of dissociated zircon prepared in Example 5 were heated with 40% w/w aqueous caustic soda at 130°C for 4 hours. The results are shown in Table 3:-

| Sample Example 5 | % Silica Extracted |
|---|---|
| Run No. 1 | 100 |
| 2 | 69 |
| 3 | 94 |
| 4 | 97 |
| 5 | 95 |
| 6 | 75 |
| 7 | 79 |
| 8 | 58 |
| 9 | 82 |
| 10 | 91 |
| 11 | 92 |

Example 8

The sample prepared in Run No. 1 of Example 5 was carefully divided into various sized fractions. The percentage of zircon undissociated in each size fraction was measured by XRD. The following results were obtained.

| Size Range (Microns) | Zircon % |
|---|---|
| Less than 75 | 7.2 |
| 75 - 90 | 3.4 |
| 90 - 150 | 1.8 |
| 150 - 180 | 0.8 |
| Original sample (repeat analysis) | 0.8 |

The particles in each fraction were examined microscopically and appeared to be similar to the feed material. There was no evidence of any agglomeration or fracture during the dissociation process. The results support the view that the degree of dissociation of zircon is proportional to the size of the particle treated.

EXAMPLE 9

24 runs were carried out in a fluid-wall reactor having a 30cm diameter x 3.6 metres porous carbon reactor tube. The blanket gas (nitrogen) used to form the fluid-wall and cool the reactor tube was introduced at a flow rate of 120 scfm.

Zircon was preblended with carbon powder (Elftex 8) and added to the top of this reactor. The dissociated zircon product was collected at the bottom of the reactor tube.

The grades of zircon used were as follows:
1. Consolidated Rutile Premium 1 zircon average particle size 105 microns (S).
2. RZ Mines Premium B zircon flour estimated average particle size 20 microns (F).
3. RZ Mines Premium A Zircon flour (350 mesh) estimated average particle size 12 microns (FF).
4. Westralian Sands Ltd. standard zircon average particle size 125 microns (WSL).
5. Allied Eneabba standard grade zircon average particle size 180 microns (CS).

TABLE A

| Run No. | Invention (I) or Comparison (C) | Temp °C | Feed | % C in feed | Feed Rate Kg/min |
|---|---|---|---|---|---|
| 1 | C | 1800 | S | 1 | 2.3 |
| 2 | C | 1980 | S | 1 | 2.3 |
| * 3 | C | 2200 | S | 0 | 2.3 |
| 4 | I | 2200 | S | 1 | 1.8 |
| 5 | I | 2200 | S | 1 | 5.4 |
| 6 | I | 2200 | S | 1 | 9 |
| 7 | I | 2370 | S | 1 | 9 |
| 8 | I | 2370 | S | 1 | 13.5 |
| 9 | I | 2200 | S | 0.2 | 2.3 |
| 10 | I | 2200 | WSL | 1 | 1.6 |
| 11 | C | 1980 | CS | 1 | 1.8 |
| 12 | I | 2200 | CS | 1 | 1.8 |
| 13 | C | 2200 | F | 1 | 1.1 |
| 14 | C | 1980 | FF | 1 | 1.8 |
| 15 | C | 2370 | FF | 1 | .8 |
| 16 | C | 2370 | F | 1 | 1.1 |
| 17 | C | 2480 | FF | 1 | 3.9 |
| 18 | C | 2370 | FF | 1 | 8.1 |
| 19 | C | 2480 | S | 1 | 1.7 |
| 20 | C | 2480 | S | 0 | 1.8 |
| 21 | C | 2480 | Refeed of run 17 product | 1 | 2 |
| 22 | I | 2370 | S | 1 | 1.3 |
| 23 | C | 2370 | FF | 1 | 8.1 |
| 24 | C | 2480 | FF | 1 | 1.6 |

* No carbon so effective temperature of about 2000°C

The product is analysed as follows:

1) % zircon was measured by X-ray diffraction.

2) % amorphous zirconia in glass matrix. This is the difference in the zirconia content of the dissociated zircon content of the dissociated zircon product as measured by chemical analysis and as measured by X-ray diffraction.

3) % $ZrO_2$ extraction by acid leach measured by the method of Example 6. % $ZrO_2$ leached = weight $ZrO_2$ in

4) % silica extraction caustic leach measured by the method of Example 7.

5) The dissociated zircon structure. The dissociated zircon was examined under an electron microscope at X3,000 magnification.

6) The crystallite size of monoclinic zirconia was measured by line broadening of the 11T reflection.

TABLE B

| Run No. | % Zircon | amorphous zirconia as % of glass matrix | % ZrO2 Extraction Acid Leach | % Silica Extraction Caustic Leach | ZrO2 Xtallite Structure | ZrO2 Xtallite Crystallite Size °A |
|---|---|---|---|---|---|---|
| 1 | 95.1 | – | – | 3 | – | |
| 2 | 58.2 | – | – | 16 | – | |
| 3 | 82.2 | – | 87 | 5.5 | – | |
| 4 | 2.7 | 14 | – | 32 | Compact | 340 |
| 5 | 0.6 | 12 | – | 32 | Compact | 390 |
| 6 | 9.5 | 17 | – | 31 | Compact | |
| 7 | 3.5 | 9 | – | 29 | Compact | |
| 8 | 12.2 | 14 | 75 | 30 | Compact | |
| 9 | 2.0 | 9 | – | 32 | Compact | |
| 10 | 1.0 | 9 | – | 31 | Compact | |
| 11 | 21.9 | 24 | 84 | 27 | – | 260 |
| 12 | 0.4 | 19 | 54 | 31 | Compact | 370 |
| 13 | 38.9 | 18 | 41 | 19 | – | 350 |
| 14 | 58.4 | – | 38 | 14 | – | |
| 15 | 23.0 | 14 | – | 24 | – | 410 |
| 16 | 31.9 | 19 | – | 21 | – | |
| 17 | 30.8 | 19 | 68 | 21 | – | |
| 18 | 33.5 | 12 | – | 21 | – | |
| 19 | 2.1 | 20 | 30 | 30 | Dendritic | |
| 20 | 0.7 | 23 | 67 | 31 | Dendritic | |
| 21 | 4.7 | 25 | – | 26.5 | – | |
| 22 | 6.3 | 20 | – | 29 | Compact | |
| 23 | 30.2 | 17 | – | 22 | – | |
| 24 | 34.3 | 15 | – | 21.5 | – | |
| Plasma-product | 2.1 | 10 | – | 29 | Dendritic | |

## Claims

1. A process for treatment of zircon which comprises passing zircon particles of average dimensions between 50 and 1000 microns through a reactor and heating the particles up to a temperature above the melting point of silica but below the melting point of zirconia and wherein the particles pass through the reactor as discrete particles and wherein the residence time in the reactor is less than 10 sec.

10

**2.** A process according to claim 1 wherein the zircon particles have an average dimension of between 70 and 350 microns.

**3.** A process according to claim 1 wherein the zircon particles have an average dimension of between 100 and 250 microns.

**4.** A process according to claim 2 or 3 wherein the temperature is between 2100°C and 2400°C.

**5.** A process according to claim 4 wherein the temperature is between 2200°C and 2300°C.

**6.** A process according to any one of claims 1 - 5 inclusive wherein the reactor is a high temperature fluid wall reactor.

**7.** A process according to any one of claims 1 - 6 inclusive wherein the residence time is between 0.5 to 5 seconds.

**8.** A process according to claim 7 wherein the residence time is between 0.5 to 2.5 seconds.

**9.** Dissociated zircon particles, capable of being prepared by a process according to any of the preceding claims, comprising compact cluster of zirconia crystallites set in a matrix of glass comprising a major proportion of silica and wherein the average size of the dissociated zircon particles is in the size range of from 62 to 1240 microns and wherein at least 90% of the compact clusters of crystallites of zirconia are below 0.5 microns in maximum dimension.

**10.** Dissociated zircon particles according to claim 9 wherein the particles are of average size in the range from 85 to 475 microns.

**11.** Dissociated zircon particles according to claim 9 wherein the particles are of average size in the range from 124 to 310 microns.

**12.** Dissociated zircon particles according to any one of claims 9 to 11 inclusive wherein the compact clusters of crystallites of zirconia are below 0.2 microns in maximum dimension.

**13.** A process of manufacture of porous silica particles by leaching the dissociated zircon particles of Claim 12 to remove a major proportion of the zirconia.

**14.** A process according to claim 12 wherein the dissociated zircon particles are leached with concentrated sulphuric acid.

**15.** A product according to any one of the claims 9 to 12 inclusive wherein the crystallites of zirconia are of average size less than 0.1 microns.

**Revendications**

**1.** Procédé de traitement du zircon qui comprend le passage de particules de zircon de dimensions moyennes comprises entre 50 et 1000 microns à travers un réacteur et le chauffage des particules jusqu'à une température supérieure au point de fusion de la silice mais inférieure au point de fusion de la zircone, dans lequel les particules traversent le réacteur sous la forme de particules discrètes et dans lequel le temps de séjour à l'intérieur du réacteur est inférieur à 10 secondes.

**2.** Procédé selon la revendication 1, dans lequel les particules de zircon ont une dimension moyenne comprise entre 70 et 350 microns.

**3.** Procédé selon la revendication 1, dans lequel les particules de zircon ont une dimension moyenne comprise entre 100 et 250 microns.

**4.** Procédé selon la revendication 2 ou 3, dans lequel la température est comprise entre 2100 °C et 2400 °C.

**5.** Procédé selon la revendication 4, dans lequel la température est comprise entre 2200 °C et 2300 °C.

**6.** Procédé selon l'une quelconque des revendications 1 à 5 inclusivement, dans lequel le réacteur est un réacteur à paroi de fluide a haute température.

**7.** Procédé selon l'une quelconque des revendications 1 à 6 inclusivement, dans lequel la durée de séjour est comprise entre 0,5 et 5 secondes.

**8.** Procédé selon la revendication 7, dans lequel la durée de séjour est comprise entre 0,5 et 2,5 secondes.

**9.** Particules de zircon dissociées, pouvant être préparées par un procédé selon l'une quelconque des revendications précédentes, comprenant un groupe compact de cristallites de zircone disposés dans une matrice de verre comprenant une proportion majeure de silice et dans lesquelles la taille moyenne des particules de zircon dissociées est comprise dans une plage allant de 62 à 1240 microns et dans lesquelles 90 % au moins des groupes compacts de cristallites de zircone ont une dimension maximum inférieure à 0,5 micron.

**10.** Particules de zircon dissociées selon la revendication 9, dans lesquelles les particules ont une dimension moyenne comprise dans une plage allant de 85 à 475 microns.

**11.** Particules de zircon dissociées selon la revendication 9 dans lesquelles les particules ont une dimension moyenne comprise dans une plage allant de 124 à 310 microns.

**12.** Particules de zircon dissociées selon l'une quelconque des revendications 9 à 11 inclusivement, dans lesquelles les groupes compacts de cristallites de zircone ont une dimension maximum inférieure à 0,2 micron.

**13.** Procédé de fabrication de particules de silice poreuse par filtration des particules de zircon dissociées de la revendication 12, pour enlever une proportion majeure de la zircone.

**14.** Procédé selon la revendication 13, dans lequel les particules de zircon dissociées sont filtrées par de l'acide sulfurique concentré.

**15.** Produit selon l'une quelconque des revendications 9 à 12 inclusivement, dans lequel les cristallites de zircone sont d'une taille moyenne inférieure à 0,1 micron.

**Patentansprüche**

**1.** Verfahren Zur Behandlung von Zirkon,
dadurch gekennzeichent,
daß man Zirkon-Partikel mit einer durchschnittlichen Größe zwischen 50 $\mu$m und 1000 $\mu$m (Micrometer) durch einen Reaktor leitet und dabei die Partikel auf eine Temperatur über dem Schmelzpunkt von Siliziumdioxid und unter dem Schmelzpunkt von Zirkoniumdioxid erhitzt, wobei man die Partikel als diskrete/einzelne Partikel durch den Reaktor hindurchleitet und die Verweilzeit in dem Reaktor kleiner als zehn Sekunden ist.

**2.** Verfahren nach Anspruch 1,
wobei die Zirkon-Partikel eine durchschnittliche Größe zwischen 70 $\mu$m und 350 $\mu$m aufweisen.

**3.** Verfahren nach Anspruch 1, wobei die Zirkon-Partikel eine durchschnittliche Größe zwischen 100 und 250 $\mu$m aufweisen.

**4.** Verfahren nach Anspruch 2 oder 3,
wobei die Temperatur zwischen 2100ºC und 2400ºC beträgt.

**5.** Verfahren nach Anspruch 4,
wobei die Temperatur zwischen 2200ºC und 2300ºC beträgt.

**6.** Verfahren nach einem der Ansprüche 1 - 5,
wobei man einen Hochtemperaturreaktor verwendet, dessen Wandung von einem Fluid gebildet ist.

**7.** Verfahren nach einem der Ansprüche 1 - 6,
wobei die Verweilzeit zwischen 0.5 bis 5 Sekunden beträgt.

**8.** Verfahren nach Anspruch 7,
wobei die Verweilzeit zwischen 0.5 und 2.5 Sekunden beträgt.

**9.** Dissoziierte Zirkon-Partikel, die herstellbar sind nach einem Verfahren der vorhergehenden Ansprüche, gekennzeichnet durch einen kompakten Cluster von Zirkondioxid-Kristalliten, eingebettet in einer Matrix aus Glas mit einem größeren Anteil von Siliziumdioxid, wobei die durchschnittliche Größe der dissoziierten Zirkon-Partikel in dem Größenbereich von 62 - 1240 $\mu$m (Mikron) liegt und wenigstens 90 % der Zirkondioxid-Kristallite kleiner ist als 0.5 $\mu$m - als größte Abmessung.

**10.** Dissoziierte Zirkon-Partikel nach Anspruch 9,
wobei die durchschnittliche Größe der Partikel von 85 Mikron bis 475 Mikron beträgt.

**11.** Dissoziierte Zirkon-Partikel nach Anspruch 9,
wobei die durchschnittliche Größe der Partikel 124 bis 310 Mikron beträgt.

**12.** Dissoziierte Zirkon-Partikel nach einem der Ansprüche 9 - 11,
wobei die kompakten Cluster aus Zirkondioxid-Kristalliten kleiner sind als 0.2 $\mu$m in der größten Abmessung.

**13.** Verfahren zur Herstellung von porösen Siliziumdioxidteilchen durch Auslaugen der dissoziierten Zirkon-Partikel von Anspruch 12, um einen größeren Anteil von Zirkondioxid zu entfernen (wodurch die Porosität entsteht).

**14.** Verfahren nach Anspruch 13,
wobei die Zirkon-Partikel ausgelaugt werden mit konzentrierter Schwefelsäure.

**15.** Verfahren nach einem der Ansprüche 9 - 12,
wobei die Zirkondioxid-Kristallite eine kleinere Größe als 0.1 Mikron aufweisen.